Europäisches Patentamt

(19) European Patent Office

Office européen des brevets

(11) Veröffentlichungsnummer: **0 188 710**
**B1**

# (12) EUROPÄISCHE PATENTSCHRIFT

(45) Veröffentlichungstag der Patentschrift:
18.05.88

(51) Int. Cl.⁴: **F 16 D 65/56,** B 61 H 15/00

(21) Anmeldenummer: **85115293.4**

(22) Anmeldetag: **02.12.85**

(54) **Bremsgestänge für Fahrzeugbremsen.**

(30) Priorität: **25.01.85 DE 3502560**

(43) Veröffentlichungstag der Anmeldung:
**30.07.86 Patentblatt 86/31**

(45) Bekanntmachung des Hinweises auf die Patenterteilung:
**18.05.88 Patentblatt 88/20**

(84) Benannte Vertragsstaaten:
**CH DE FR GB LI SE**

(56) Entgegenhaltungen:
**EP-A-0 121 815**
**DE-A-2 346 828**
**DE-A-2 727 473**
**DE-A-3 307 795**
**DE-A-3 326 374**
**DE-C-65 142**
**GB-A-221 555**
**US-A-2 002 139**

(73) Patentinhaber: **KNORR- BREMSE AG, Moosacher Strasse 80 Postfach 401060, D-8000 München 40 (DE)**

(72) Erfinder: **Nadas, Julius, Trezzanostrasse 13, D-8057 Eching (DE)**

EP 0 188 710 B1

## Beschreibung

Die Erfindung betrifft ein Bremsgestänge für Fahrzeugbremsen mit einem zwischen zwei Bremsgestangteilen eingeordneten, von der durch einen Bremskraftmotor ausübbaren Bremszupannkraft auf Zug oder Druck belastbaren, längenveränderlichen Spielnachsteller, insbesondere Bremszange für Schienenfahrzeug-Scheibenbremsen mit als Spielnachsteller ausgebildeter Zugstange, wobei der Spielnachsteller einen Gewindespindeltrieb beinhaltet, dessen eines Teil drehbar und dessen anderes Teil drehfest gehalten ist.

Eine den Vorstehend genannten Merkmalen entsprechende Bremszange ist beispielsweise der DE-A-2 346 828 entnehmbar. Das drehbare Teil des Gewidespindeltriebes ist hierbei als Doppelspindel mit gegenläufigen Gewinden ausgebilden, wobei die Gewinde in an den Bremszangenhebeln angelenkten Mutterteilen eingeschraubt sind. Ein Ende der Doppelspindel ist mit einem ratschenartigen Drehantrieb versehen, welcher über einen Bowdenzug in Hubabhängigkeit vom Bremskraftmotor betätigbar ist. Mittels des bekannten Spielnachstellers ist jedoch kein sofortiges, vollständigen Nachstellen zu Bremsbeginn möglich.

Nach der nicht vorveröffentlichten DE-A-3 326 374 ist für den als Zugstange einer Bremszange ausgebildeten Spielnachsteller ein gesonderter Hilfskraftmotor vorgesehen, welcher voreilend zum Bremskraftmotor betätigbar ist. Der Aufbau dieses Spielnachstellers ist vielteilig und damit teuer, zudem wird für den Hilfskraftmotor ein beachtlicher Einbauraum benötigt.

Es ist Aufgabe der Erfindung, ein Bremsgestänge der eingangs genannten Art derart auszugestalten, daß der Spielnachsteller bei einfachem, kompakten und damit billigem und raumsparenden Aufbau eine vom Drehweg unabhängige, sofort wirkende Spring-Nachstellfunktion besitzt, also zu Bremsbeginn übermäßiges Spiel sofort und vollständig nachstellt.

Diese Aufgabe wird nach der Erfindung dadurch gelöst, daß das drehbare Teil des ein selbsthemmendes Gewinde aufweisenden Gewindespindeltriebes von einer Drehfeder ständig in Nachstell-Drehrichtung belastet ist und daß eine hub- oder kraftabhängig vom Bremskraftmotor gesteuerte, bei einem Bremsenanlegen entsprechender Ansteuerung öffnende Drehsperre für das drehbare Teil vorgesehen ist.

Die Unteransprüche zeigen nach der weiteren Erfindung vorteilhafte Ausgestaltungsmöglichkeiten für ein derart aus gebildetes Bremsgestänge auf.

In der Zeichnung ist ein Ausführungsbeispiel für ein nach der Erfindung ausgebildetes Bremsgestänge dargestellt, und zwar zeigt

Fig. 1 ein als Bremszange für eine Scheibenbremse ausgebildetes Bremsgestänge in verkleinertem Maßstab,

Fig. 2 eine Ansicht der Zugstange der Bremszange,

Fig. 3 einen Teilschnitt durch die um 90 Grad um ihre Längsachse gedrehte Zugstange und

Fig. 4 einen Querschnitt durch die Zugstange.

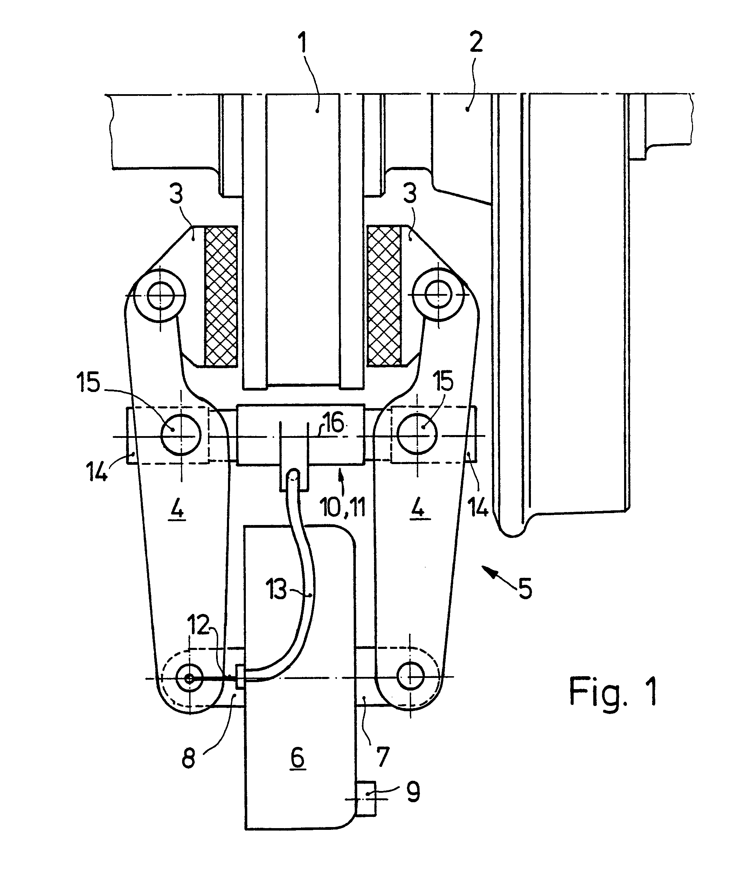

In Fig. 1 ist ein Teil eines mit einer Bremsscheibe 1 ausgestatteten Schienenfahrzeug-Radsatzes 2 dargestellt. An die Bremsscheibe 1 sind an beiden Seiten Bremsbacken 3 anpreßbar, welche an den Enden der Bremszangen-Bremshebel 4 eines als Bremszange 5 ausgebildeten Bremsgestänges angelenkt sind. An ihren anderen Enden sind die beiden Bremshebel 4 an einem mit dem Zylinderkörper eines Bremszylinders 6 verbundenen Lagerauge 7 bzw. der Kolbenstange 8 des Bremszylinders 6 angelenkt. Der einen Bremskraftmotor darstellende und entsprechend dimensionierte Bremszylinder 6 ist im Fahrzeug in üblicher Weise fest oder schwimmend gehalten, er ist über einen Rohranschluß 9 mit entsprechend der gewünschten Bremsstärke geregelter Bremsdruckluft zum Ausfahren der Kolbenstange 8 beaufschlagbar. In ihren mittleren Bereichen zwischen ihren beidseitigen Endanlenkungen sind die beiden Bremshebel 4 durch eine als Spielnachsteller 10 ausgebildete Zugstange 11 miteinander gelenkig verbunden. An der Anlenkung der Kolbenstange 8 am ihr zugeordneten Bremshebel 4 ist die Seele 12 eines Bowdenzuges 13 befestigt, dessen Mantelende am Gehäuse des Bremszylinders festgehalten ist. Der Bowdenzug 13 erstreckt sich zum Spielnachsteller 10. Die Zugstange 11 umfaßt zwei Mutterteile 14, welche zwischen den beiden Wangen der jeweils doppelwangig ausgebildeten Bremshebel 4 um Lagerungen 15 schwenkbar, aber um die hierzu senkrecht verlaufende Gewindeachse 16 undrehbar gelagert sind.

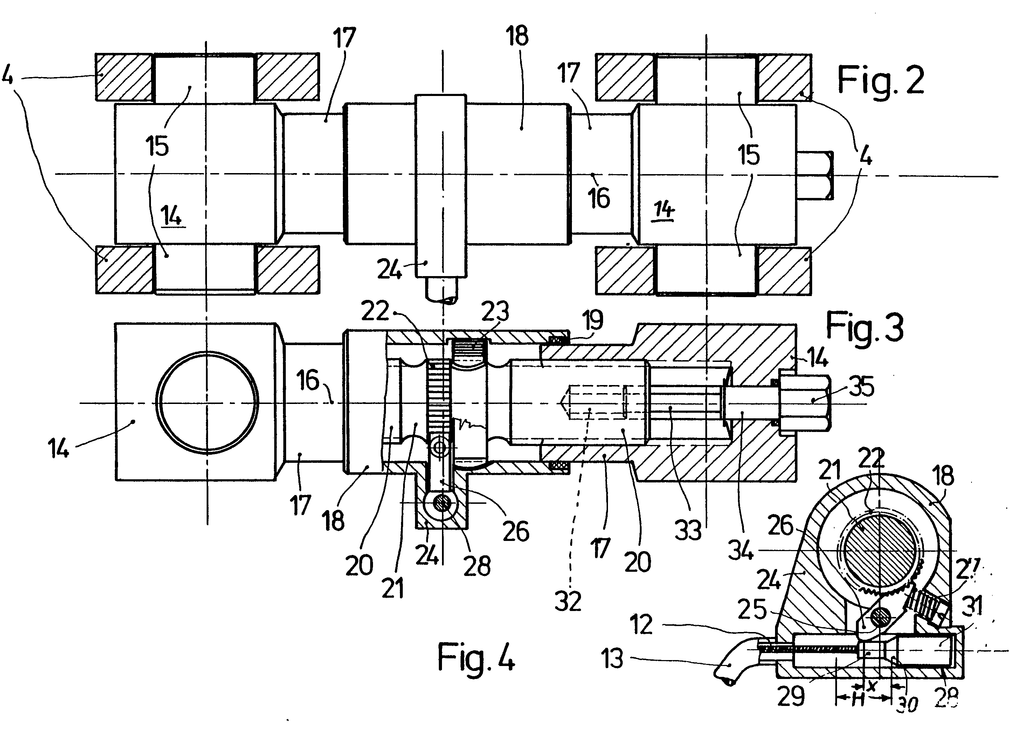

Gemäß Fig. 2 und 3 weisen die Mutterteile 14 einander zugewandte Zylinderansätze 17 auf. Der gemäß Fig. 3 linksseitige Zylinderansatz 17 ist fest mit einer Hülse 18 verbunden, welche sich zum rechtsseitigen Zylinderabsatz 17 erstreckt und mittels eines Dichtringes 19 verschmutzungsdicht axial verschieblich auf diesem geführt ist. Mit den beiden Mutterteilen 14 sind die beiden, gegenläufige Gewinde aufweisenden Gewindeenden 20 einer Doppelspindel 21 verschraubt. In ihrem mittleren Bereich, zwischen den beiden Zylinderansätzen 17, weist die Doppelspindel 21 ein aus Fig. 3 und Fig. 4 ersichtliches Sperrad 22 auf, welches von der Hülse 18 übergriffen ist. Neben dem Sperrad 22 ist eine die Doppelspindel 21 umgebende Spiralfeder 23 angeordnet. Das äußere Ende der Spiralfeder 23 ist an der Hülse 18 und das innere Ende an der Doppelspindel 21 drehfest gehalten; infolge ihrer Vorspannung belastet die Spiralfeder 23 die Doppelspindel 21 ständig in einer Drehrichtung, welche über die selbsthemmend ausgebildeten Gewinde der Gewindeenden 20 ein Verschrauben der Doppelspindel 21 mit den beiden Mutterteilen 14 in Annäherungsrichtung der letzteren zueinander zu bewirken sucht. In einem Gehäuseansatz 24 der Hülse 18 ist um einen Bolzen 25 drehbar eine Sperrklinke 26 gelagert, welche von einer Feder 27 in Eingriffsrichtung in die Verzahnung des Sperrades 22 belastet ist. Weiterhin ist im Gehäuseansatz 24 quer zur Doppelspindel 21 verschieblich ein Schaltstößel 28 gelagert, welcher einerseits einen im Durchmesser kleinen, die Sperrklinke 26 unbeeinflußt lassenden Ansatz 29 aufweist, der über einen konischen Zwischenabschnitt 30 in einen längeren Abschnitt 31 größeren Durchmessers übergeht (Fig. 4). Bei Verschieben des Schaltstößels 28 gemäß Fig. 4 nach links läuft vermittels des Zwischenabschnittes 30 der Abschnitt 31 an die Sperrklinke 26 an und hebt diese entgegen der Kraft der Feder 27 aus dem Sperrad 22 aus. Der Schaltstößel 28 ist auf Seiten eines Ansatzes 29 mit der Seele 12 des Bowdenzuges 13 gekoppelt, dessen Mantel sich am Gehäuseansatz 24 abstützt.

Bei gelöster Bremse nehmen alle Teile der Bremszange 5 mit der Zugstange 11 und den in diese integrierten Spielnachsteller 10 die aus den Figuren ersichtliche Lagen ein. Die Zugstange 11 weist dabei eine solche Länge auf, daß die Bremsbacken 3 um ein geringes Lüftspiel von der Bremsscheibe 1 abgehoben sind. Die Sperrklinke 26 ist unter der Kraft der Feder 27 in die Verzahnung des Sperrades 22 eingerastet und hält die Doppelspindel 21 drehfest. Wird zum Bremsen der Bremszylinder 6 durch den Rohranschluß 9 druckmittelbeaufschlagt, so beginnt die Kolbenstange 8 zum Anlegen der Bremse auszufahren, wobei die Bremshebel zur Annäherung der Bremsbacken 3 an die Bremsscheibe 1 um die Lagerungen 15 geschwenkt werden und die Seele 12 des Bowdenzuges 13 bremszylinderseitig aus dem Bowdenzug-Mantel herausgezogen wird. Andersseitig bewegt dabei der Bowdenzug 23 den Schaltstößel 28 gemäß Fig. 4 nach links, wobei nach Zurücklegen eines geringen Hubweges X der Zwischenabschnitt 30 sowie der Abschnitt 31 die Sperrklinke 26 aus dem Sperrad 22 ausheben. Damit wird die bis dahin drehfest gehaltene Doppelspindel 21 drehfrei. Bei korrektem Lüftspiel legen gerade in dieser Hubstellung sich die Bremsbacken 3 an die Bremsscheibe 1 an, so daß die Spiralfeder 23 die Doppelspindel 21 nicht in Annäherungsrichtung der beiden Mutterteile 14 zu drehen vermag, da die an der Bremsscheibe 1 anliegenden Bremsbacken 3 über die Bremshebel 4 einer derartigen Annäherungs-Verschraubungsdrehung großen Widerstand entgegensetzen. Bei weiterer Druckmittelbeaufschlagung des Bremszylinders 6 spreizt dieser die Bremshebel 4 mit großer Kraft auseinander, wobei unter entsprechender Zugbelastung der Zugstange 11 und damit des Spielnachstellers 10 die Bremsbacken 3 mit großer Kraft an die Bremsscheibe 1 angepreßt werden. Infolge der dabei auftretenden, elastischen Verformung führt die Kolbenstange 8 einen gewissen, weiteren Kolbenhub aus, welcher über den Bowdenzug 13 ein Verschieben des Schaltstößels 28 gemäß Fig. 4 nach links, ausgehend von der dargestellten Ruhestellung maximal um den Hubweg H, bewirkt und wobei der Abschnitt 31 unter der Sperrklinke 26 entlanggleitet und letztere vom Sperrad 22 ausgehoben hält. Die Zugbeanspruchung des Spielnachstellers 10 verläuft durch die beidseitigen, selbsthemmenden Gewindeverschraubungen der Doppelspindel 21 mit den Mutterteilen 14, wodurch in diesen Gewindeverschraubungen hohe Reibkräfte auftreten, welche die Doppelspindel 21 sicher drehfest halten.

Beim nachfolgendem Lösevorgang spielen sich entsprechend umgekehrte Vorgänge ab, wobei über den Bowdenzug 13 der Schaltstößel 28 in seine in Fig. 4 dargestellen Lage zurückgeschoben wird. Im Augenblick des nur noch nahezu kraftlosen Anliegens der Bremsbacken 3 an der Bremsscheibe 1 läuft der Zwischenabschnitt 30 unter der Sperrklinke 26 hindurch, wobei letztere wieder freigegeben wird und unter der Kraft der Feder 27 wieder in das Sperrad 22 einrastet; die Doppelspindel 21 wird damit vermittels der das Sperrad 22 und die Sperrklinke 26 umfaßenden Drehsperre wieder drehfest gehalten. Beim nachfolgenden Resthub um den Hubweg X gelangt der Ansatz 29 unter die Sperrklinke 26 und die Bremsbacken 3 heben sich um das geringe Soll-Lüftspiel von der Bremsscheibe 1 ab.

Falls zu Beginn eines Bremsvorgangen ein zu großes Lüftspiel zwischen den Bremsbacken 3 und der Bremsscheibe 1 vorhanden ist, so liegen zu demjenigen Zeitpunkt, zu welchem die Sperrklinke 26 wie vorstehend beschrieben durch Auflaufen auf den Zwischenabschnitt 30 und den Abschnitt 31 gerade aus dem Sperrad 22 ausgehoben wird, die Bremsbacken 3 noch nicht an der Bremsscheibe 1 an.

Die Zugstange 11 und der Spielnachsteller 10 stehen daher noch nicht unter Zugbeanspruchung und in den Verschraubungen zwischen der Doppelspindel 21 und den Mutterteilen 14 ist somit nur geringe Reibung vorhanden. Die Spiralfeder 23 vermag daher die Doppelspindel 21 zu drehen, wobei sich die beiden Mutterteile 14 in Annäherungsrichtung zueinander auf den Gewindeenden 20 verschrauben, bis die Bremsbacken 3 an der Bremsscheibe 1 anliegen und somit eine der weiteren Verschraubung entgegenwirkende Zugbeanspruchung in der Zugstange 11 auftritt. Der weitere Brems- und auch der nachfolgende Lösevorgang erfolgen wie bereits beschrieben. Es ist festzustellen, daß das übermäßige Bremslüftspiel zugleich bei Bremsbeginn vollständig nachgestellt wird.

Bei einem Austausch verschlissener Bremsbacken 3 gegen neue Bremsbacken muß die Zugstange 11 durch Rückstellen des Spielnachstellers 10 verlängert werden, derart, daß bei gelöster Bremse die unverschlissenen Bremsbacken 3 zwischen die Bremshebel 4 und die Bremsscheibe 1 einsetzbar sind. Hierzu kann, wie insbesondere aus Fig. 2 und 3 ersichtlich, die Doppelspindel 21 einseitig mit einer axialen, im Umfang profilierten, beispielsweise sechseckigen, sacklochartigen Ausnehmung 32 versehen sein, in welche mit einem entsprechend profilierten Abschnitt 33 undrehbar, aber axial verschieblich ein Antriebsteil 34 eingreift. Das Antriebsteil 34 durchgreift drehbar das eine Mutterteil 14 und endet außerhalb diesem mit einem als Sechskantkopf 35 ausgebildeten Profilflächenabschnitt. Nach Ansetzen eines geeigneten Drehwerkzeuges, beispielsweise eines Schraubenschlüssels, an den Sechskantkopf 35 können das Antriebsteil 34 und damit die Doppelspindel 21 derart gedreht werden, daß die beiden Mutterteile 14 auf der Doppelspindel 21 in Entfernungsrichtung voneinander verschraubt werden, wobei zugleich die Spiralfeder 23 aufgezogen bzw. gespannt wird. Durch entsprechende Verzahnungsausbildung des Sperrades 22 ratscht dieses dabei unter der Sperrklinke 26 durch. Nach Einsetzen der unverschlissenen Bremsbacken kann durch entsprechendes Drehen des Antriebsteiles 34, wiederum unter Durchratschen der Drehsperre 22, 26, ein Sollüftspiel zwischen den Bremsbacken 3 und der Bremsscheibe 1 eingestellt werden.

Durch übliches Justieren des Bowdenzuges 13, insbesondere der Länge des Bowdenzugmantels, kann die Größe des Hubweges X durch entsprechendes Verschieben des Schaltstößels 28 in der Bremsenlösestellung eingestellt werden; da der Hubweg X dem Sollüftspiel der Bremsbacken 3 zur Bremsscheibe 1 proportional ist, wird mit dem Justieren des Hubweges X auch die Größe des vom Spielnachsteller 10 selbsttätig konstant zu haltenden Sollüftspieles einjustiert.

Der vorstehend beschriebene, in die Zugstange 11 integrierte Spielnachsteller ist auch bei Bremsgestängen verwendbar, welche von der Bauart einer Bremszange 5 gemäß Fig. 1 abweichen, beispielsweise bei H-Bremsgestängen. Durch Umkehr der Drehrichtung der von der Spiralfeder 23 auf die Doppelspindel 21 ausgeübten Drehbelastung und entsprechender Anpassung der Steuerung für die Sperrklinke 26 ist es des weiteren möglich, den Spielnachsteller in eine während Bremsungen druckbelasteten Druckstange eines Bremsgestänges einzuordnen. Auch hierbei bewirkt die Doppelspindel beim Ausheben der Sperrklinke 26 - bei von Druckkräften unbelastetem Spielnachsteller - durch Drehen, hierbei allerdings in Verschraubrichtung zum Entfernen der beiden Mutterteile voneinander, ein sofortiges und vollständiges Spielnachstellen zu Bremsbeginn.

Anstatt die das Sperrad 22 und die Sperrklinke 26 umfaßende Drehsperre unter hoher Drehmomentbelastung durchratschend auszubilden, kann die Sperrklinke 26 auch mit einer Handbetätigung versehen werden, welche beim willkürlichen Drehen der Doppelspindel 21 vermittels des Antriebteiles 34 zum Ausheben der Sperrklinke 26 zu betätigen ist.

In weiterer Abänderung ist es möglich, anstelle der Drehsperre 22, 26 einen schaltbaren Freilauf vorzusehen. Anstelle der Doppelspindel 21 kann auch eine einfache, nur einseitig des Sperrades einen Gewindeabschnitt aufweisende Gewindespindel vorgesehen sein, die an einem der beiden Bremshebel drehbar, aber axial unverschieblich gelagert ist. Schließlich ist es in weiterer Abänderung der vorstehend beschriebenen Ausführungsbeispiele möglich, anstelle der Bewegungssteuerung für den Schaltstößel 28 mittels eines Bowdenzuges 13 eine andersartige Steuerung vorzusehen; insbesondere kann der Schaltstößel von einem Kolben bewegbar sein, der vom Beaufschlagungsdruck des Bremszylinders 6 entgegen der Kraft einer Feder belastet und gerade bei Erreichen des Bremsenanlege-Beaufschlagungsdruckes mitsamt dem Schaltstößel bewegbar ist. Hierbei kann es zweckmäßig sein, den Schaltstößel selbst zu dem erwähnten Kolben auszubilden.

## Patentansprüche

1. Bremsgestänge für Fahrzeugbremsen mit einem zwischen zwei Bremsgestängeteilen (Bremshebel 4) eingeordneten, von der durch einen Bremskraftmotor (Bremszylinder 6) ausübbaren Bremszuspannkraft auf Zug oder Druck belastbaren, längenveränderlichen Spielnachsteller, insbesondere Bremszange (5) für Schienenfahrzeug-Scheibenbremse mit als Spielnachsteller (10) ausgebildeten Zugstange (11), wobei der Spielnachsteller (10) einen Gewindespindeltrieb beinhaltet, dessen eines Teil (Doppelspindel 21) drehbar und dessen anderes Teil (Mutterteile 14) drehfest gehalten ist, dadurch gekennzeichnet, daß das drehbare Teil (Doppelspindel 21) des ein selbsthemmendes Gewinde aufweisenden Gewindespindeltriebes von einer Drehfeder (Spiralfeder 23) ständig in Nachstell-Drehrichtung belastet ist und daß eine hub- oder kraftabhängig vom Bremskraftmotor (Bremszylinder 6) gesteuerte, bei einem Bremsenanlegen entsprechender Ansteuerung öffnende Drehsperre (Sperrad 22, Sperrklinke 26) für das drehbare Teil (Doppelspindel 21) vorgesehen ist.

2. Bremsgestänge nach Anspruch 1, dadurch gekennzechnet, daß das drehbare Teil als Doppelspindel (21) mit gegenläufigen Gewindeenden (20) ausgebildet ist, wobei die Gewindeenden (20) mit an Bremszangenhebeln (4) gehaltenen Mutterteilen (14) verschraubt sind, wobei sich zwischen den Gewindeenden (20) ein der Drehsperre zugehörenden Sperrad (22) und neben diesem eine sich einerseits an einem der Bremszangenhebel (4) und andererseits an der Doppelspindel (21) gehaltene, vorgespannte Spiralfeder (23) befinden.

3. Bremsgestänge nach Anspruch 1 oder 2, dadurch gekennzeichnet, daß die Mutterteile (14) einander zugewandte Zylinderansätze (17) aufweisen, auf deren einem Zylinderansatz eine Hülse (18) gehalten ist, die sich zum anderen Zylinderansatz erstreckt und auf diesem verschmutzungsdicht (Dichtring 19) axial verschieblich geführt ist, und daß das Außenende der Spiralfeder (23) an der Hülse (18) befestigt ist.

4. Bremsgestänge nach einem oder mehreren der Ansprüche 1 bis 3, dadurch gekennzeichnet, daß die Doppelspindel (21) drehfest, aber axial verschieblich mit einem koaxialen, das eine der Mutterteile (14) drehbar, aber axial unverschieblich durchsetzenden Antriebsteil (34) gekoppelt ist, welches außerhalb des Mutterteils (14) einen gegebenenfalls als Sechskantkopf (35) ausgebildeten Profilflächenabschnitt zum Ansetzen eines Drehwerkzeuges aufweist.

5. Bremsgestänge nach den Ansprüchen 1 bis 3, dadurch gekennzeichnet, 15 daß mit dem Sperrad (22) eine federnd einrastende Sperrklinke (26) zusammenwirkt, die an der Hülse (18) gelagert ist und die sowohl bei einem Grenzwertübersteigen der Drehmomentbelastung der Doppelspindel (21) in Drehrichtung entgegen der Spiralfederbelastung als auch mechanisch bei dem Bremsenanlegen entsprechender Ansteuerung aushebbar ist.

**Claims**

1. Brake linkage for vehicle brakes having a longitudinally variable clearance adjuster, arranged between two brake linkage parts (brake levers 4) and loadable under tension or pressure by a brake application force which may be exerted by a brake force motor (brake cylinder 6), more particularly a brake caliper (5) for rail vehicle disc brakes with a tension rod (11) constituting the clearance adjuster (10), the latter containing a threaded spindle drive, one part (double spindle 21) of which is held in a rotatable manner and the other part (nut parts 14) of which is held in a manner secure against rotation, characterised in that the rotatable part (double spindle 21) of the threaded spindle drive, which has a self-locking thread, is permanently biased by a torsion spring (spiral spring 23) in the rotary adjustment direction and in that a rotation stop (stop wheel 22, stop pawl 26), which is controlled in a stroke- or force- dependent manner by the brake force motor (brake cylinder 6) and which opens in the event of activation corresponding to application of the brake, is provided for the rotatable part (double spindle 21).

2. Brake linkage according to claim 1, characterised in that the rotatable part is constructed as a double spindle (21) with thread ends (20) running in opposite directions, said ends being screwed together with nut parts (14) mounted on brake caliper levers (4), a stop wheel (22) belonging to the rotation stop and, next to said wheel, a pretensioned spiral spring (23) held, on the one hand, on one of the brake caliper levers (4) and, on the other hand, on the double spindle (21) being located between the thread ends (20).

3. Brake linkage according to claim 1 or 2, characterised in that the nut parts (14) have cylinder extensions (17) facing each other, on one of which a sleeve (18) is mounted, extending to the other cylinder extension and axially slidable thereon in a contamination-proof manner (sealing ring 19), and in that the outer end of the spiral spring (23) is secured to the sleeve (18).

4. Brake linkage according to one or more of claims 1 to 3, characterised in that the double spindle (21) is coupled in a manner secure against rotation, but axially displaceable, with a coaxial drive part (34) which passes through one of the nut parts (14) in a rotatable, but axially non-displaceable manner and which has a profiled surface section outside the nut part (14), which section may be constructed as a hexagon head (35) for the application of a turning tool.

5. Brake linkage according to claims 1 to 3, characterised in that a stop pawl (26) cooperates with the stop wheel (22), engaging in a resilient manner, the pawl being mounted on the sleeve (18) and capable of being lifted clear not only when the torque load limit of the double spindle (21) in the direction of rotation opposite to the spiral spring load is exceeded, but also mechanically in the event of activation corresponding to application of the brake.

**Revendications**

1. Tringlerie de frein pour des freins de véhicules comportant un dispositif de rattrapage du jeu qui est disposé entre deux éléments de la tringlerie de frein (levier de frein 4), qui est susceptible d'être chargé en traction ou en pression par la force de serrage du frein pouvant être exercée à partir du moteur de force de freinage et qui est susceptible de modification de sa longueur, en particulier pince de freinage (5) pour des freins à disques de véhicules sur rails avec une barre de traction (11) réalisée sous la forme d'un dispositif de rattrapage du jeu (10), le dispositif de rattrapage du jeu (10) comportant une transmission à broche filetée dont une partie (double-broche 21) est montée de façon à pouvoir tourner et dont l'autre partie (éléments d'écrou 14) est montée de façon à ne pas pouvoir tourner, caractérisée par le fait que la partie qui est susceptible de tourner (double-broche 21) de la transmission à broche filetée qui comporte un filetage auto-bloquant est chargée en permanence par un ressort de torsion (ressort spiral 23) dans le sens de rotation du rattrapage de jeu, et qu'il est prévu pour la partie qui est susceptible de tourner (double-broche 21) un dispositif d'arrêt de rotation (roue d'encliquetage 22, cliquet d'arrêt 26) qui est fonction de la course ou de la force, qui est commandé par le moteur de la force de freinage (cylindre de frein 6) et qui s'ouvre pour une commande qui correspond à une application des freins.

2. Tringlerie de frein selon la revendication 1, caractérisée par le fait que la partie susceptible de tourner est réalisée sous la forme d'une double-broche filetée (21) avec des extrémités filetées en sens inverse entre elles (20), lesdites extrémités filetées (20) sont en prise avec des éléments-écrous (14) portés par le levier (4) des pinces de frein, alors qu'entre les extrémités filetées (20) se situe une roue d'encliquetage (22) appartenant au dispositif d'arrêt de rotation et près de celle-ci un ressort spiral préarmé (23) fixé d'une part à l'un des leviers (4) de la pince de freinage et d'autre part, à la double-broche (21).

3. Tringlerie de frein selon la revendication 1 ou 2, caractérisée par le fait que les éléments-écrous (14) possèdent des apppndices cylindriques (17) qui se font face et sur l'un des appendices est montée une douille (18) qui s'étend vers l'autre appendice cylindrique sur lequel elle est guidée axialement et de façon étanche aux encrassements (bague d'étanchéité 19), et que l'extrémité extérieure du ressort spiral (23) est fixé à la douille (18).

4. Tringlerie de frein selon une ou plusieurs des revendications 1 à 3, caractérisée par le fait que la double-broche (23) est accouplée sans pouvoir tourner mais en pouvant se déplacer axialement, avec un élément d'entraînement (34) coaxial, qui traverse la partie-écrou (14) avec pouvoir de rotation mais sans pouvoir se déplacer axialement, ledit élément d'entraînement (34) comportant à l'extérieur de la partie-écrou (14), une section profilée éventuellement en six pans (35) et servant à l'application d'un outil.

5. Tringlerie de frein selon les revendications 1 à 3, caractérisée par le fait qu'avec la roue d'encliquetage (22) coagit un cliquet (26) s'enclenchant élastiquement et monté sur la douille (18) et qui est susceptible d'être dégagé aussi bien dans le das d'un dépassement de la valeur limite du couple de rotation chargeant la double-broche (21) dans le sens de rotation inverse à la charge du ressort spiral, que mécaniquement lors de la commande qui correspond à l'application des freins.

Fig. 1

Fig. 2

Fig. 3

Fig. 4

0 188 710